# EUROPÄISCHE PATENTSCHRIFT

(11) **EP 4 052 884 B1**
(45) Veröffentlichungstag und Bekanntmachung des Hinweises auf die Patenterteilung: **29.04.2026**
(21) Anmeldenummer: 22159880.8
(22) Anmeldetag: 03.03.2022
(51) Int. Cl.: B29C 45/52, B29C 45/17, B29C 45/60

(54) **RÜCKSTROMSPERRE**
NON-RETURN VALVE
CLAPET ANTI-RETOUR

(30) Priorität: 04.03.2021 DE 102021105197
(43) Veröffentlichungstag der Anmeldung: 07.09.2022
(73) Patentinhaber: Erwin Quarder Systemtechnik GmbH, 32339 Espelkamp (DE)
(72) Erfinder: Warkentin, Benjamin, 32339 Espelkamp (DE); Krahn, Daniel, 32339 Espelkamp (DE); Reimer, Manuel, 32339 Espelkamp (DE); Fransen, Eduard, 32339 Espelkamp (DE)
(74) Vertreter: Geskes, Christoph

(56) Entgegenhaltungen:
- WO-A1-2007/030913
- JP-A- 2000 158 499
- JP-A- 2017 056 655
- JP-A- S 516 257
- US-B1- 6 270 703

## Beschreibung

Die vorliegende Erfindung betrifft eine Rückstromsperre für eine Plastifizierschnecke einer Spritzgießmaschine. Die Erfindung betrifft des Weiteren eine Spritzgießmaschine mit einer solchen Rückstromsperre sowie ein Verfahren zum Betreiben einer solchen Spritzgießmaschine.

Rückstromsperren haben als insbesondere lösbarer Bestandteil einer Plastifizierschnecke einen entscheidenden Einfluss auf die Qualität eines Spritzgussteils. Als problematisch und qualitätsvermindernd stellen sich in diesem Zusammenhang unter anderem ungewollte Kunststoffablagerungen dar, die sich im Laufe des Betriebs der Spritzgießmaschine unterhalb der Sperrhülse einstellen können, und zwar zwischen der Sperrhülse und dem Zwischenabschnitt des Grundkörpers. Diese Ablagerungen können sich beispielsweise sporadisch lösen und ungewollt auf der Oberfläche des Spritzgussteils sichtbar werden.

Das Dokument US 6 270 703 B1 zeigt eine Rückstromsperre, bei der ein Zwischenabschnitt eines Grundkörpers axial ausgerichtete Zahnreihen mit einzelnen Zähnen auf- weist. Zum (Weiter-)Fördern der zwischen dem Zwischenabschnitt und dem Druckring befindlichen Kunststoffmasse in Richtung Grundkörperspitze sind die Zahnreihen nicht geeignet. Der Zwischenabschnitt eines Grundkörpers der JP 2017 056655 zeigt ein als Erhebung ausgebildetes Förderelement zum Fördern der Kunststoffmasse, das allerdings nicht zum Verhindern oder Entfernen von ringförmigen Ablagerungen vorgesehen ist. Die WO 2007/030913 A1 zeigt ebenfalls nur ein ähnliches - allerdings unterbrochenlinienhaftes - Förderelement, das nicht zum Verhindern oder Entfernen von Ablagerungen vorgesehen ist.

Weitere unerwünschte Ablagerungen können sich im Bereich der endständigen Düse des Plastifizierzylinders ergeben, in die der Endbereich des Grundkörpers bzw. dessen Spitze mitsamt den Flügeln während des Einspritzvorgangs eintaucht. Auch diese Ablagerungen können sich im aufe des Betriebs lösen und auf dem Spritzgussteil sichtbar werden oder zu Verstopfungen in dem von der Düse zu der Kavität des Spritzgusswerkzeugs führenden Fluidkanal führen, durch den die flüssige Kunststoffmasse von dem Plastifizierzylin- der in das Spritzgusswerkzeug gelangt.

Die JP 2000 158499 A und JP S51 6257 A zeigen eine Schneckenspitze, die mit mehreren Elementen versehen ist, mit denen die Ablagerungen entfernt werden sollen.

Ausgehend hiervon ist es Aufgabe der vorliegenden Erfindung, die eingangs genannte Rückstromsperre weiterzuentwickeln, insbesondere derart, dass die vorgenannten Abla- gerungen in der Düse des Plastifizierzylinders und/oder im Bereich zwischen Sperrhülse und Zwischenabschnitt des Grundkörpers der Rückstromsperre verhindert, reduziert oder entfernt werden können.

Diese Aufgabe wird gelöst durch eine Rückstromsperre der eingangs genannten Art mit den Merkmalen des Anspruchs 1, eine Spritzgießmaschine mit einer solchen Rückstromsperre mit den Merkmalen des Anspruchs 6 sowie ein Verfahren zum Betreiben der Spritzgießmaschine mit den Merkmalen des Anspruchs 10.

Eine erfindungsgemäße Rückstromsperre ist entsprechend dadurch gekennzeichnet, dass der Zwischenabschnitt des Grundkörpers und/oder die Flügel desselben ein oder mehrere längliche, insbesondere steg- oder rippenartige Wirkelemente aufweisen, die im Betrieb der Spritzgießmaschine dem Entstehen von störenden, ringförmig geschlossenen, umlaufenden Kunststoffablagerungen entgegenwirken können oder die solche, bereits entstandenen Kunststoffablagerungen entfernen können.

Erfindungsgemäß sind ein oder mehrere der länglichen Wirkelemente demnach dem Zwischenabschnitt des Grundkörpers und/oder einem oder mehreren Flügeln desselben zugeordnet.

Was die erste erfindungsgemäße Variante betrifft, nämlich die Zuordnung zu dem Zwischenabschnitt, bildet jedes der länglichen Wirkelemente eine Erhebung der/an der Außenseite des Zwischenabschnitts des Grundkörpers. Dies derart, dass das Entstehen von ringförmig geschlossenen, umlaufenden Ablagerungen von Kunststoff zwischen dem Zwischenabschnitt und der Sperrhülse verhindert wird. Die länglichen Wirkelemente wirken dabei in Umfangsrichtung als Unterbrecher, die die Ausbildung eines geschlossenen Ab- lagerungsrings verhindern oder reduzieren können. Zweckmäßigerweise reichen sie hier- für möglichst nahe an die Innenseite der Sperrhülse heran.

Der Zwischenabschnitt des Grundkörpers weist drei in Umfangsrichtung des Zwischenabschnitts voneinander beabstandete längliche Wirkelemente auf.

Was die Grundform des Zwischenabschnitts des Grundkörpers betrifft, so ist der Zwischenabschnitt ein zylinderförmiger Körper oder ein konusförmiger Körper mit entsprechend zylindrischer oder konischer Mantelfläche, an dem jedes der länglichen Wirkelemente angeordnet ist, insbesondere befestigt oder angeformt, sodass jedes der länglichen Wirkelemente unter Bildung der jeweiligen Erhebung der Außenseite des Zwischenabschnitts des Grundkörpers gegenüber dieser Mantelfläche hervorsteht.

Jedes der in Umfangsrichtung voneinander beabstandeten, länglichen Wirkelemente des Weiteren verläuft mindestens abschnittsweise, vorzugsweise über die gesamte Länge desselben, erfindungsgemäß schräg bzw. winklig zu den (gedachten) Mantellinien der Mantelfläche des zylinderförmigen oder konusförmigen Körpers des Zwischenabschnitts des Grundkörpers.

Anders ausgedrückt erstreckt sich das oder jedes der länglichen Wirkelemente winklig zur senkrecht zur Längs- bzw. Drehachse des Grundkörpers verlaufenden Querebene, in der der Zwischenabschnitt rotiert. Dabei kann der jeweilige Winkel zu dieser Querebene konstant sein, sich aber auch entlang des Zwischenabschnitts ändern.

Der Verlauf der länglichen Wirkelemente bzw. die jeweilige Schrägstellung derselben ist dabei bevorzugt derart gewählt, dass das jeweilige längliche Wirkelement als Förderorgan wirkt, mit dem im Betrieb der Spritzgießmaschine während der Plastifizierungs- und Dosierungsphase, in der die Plastifizierschnecke mitsamt dem Grundkörper der Rückstromsperre um die Längsachse rotiert wird, Kunststoffmasse durch das oder die entsprechend mitrotierenden länglichen Wirkelemente in Richtung der Flügel weitergefördert wird. Mit anderen Worten wirkt jedes der länglichen Wirkelemente dabei entsprechend wie eine Förderschaufel eines Förderrads.

Jedes der länglichen Wirkelemente begrenzt in Umfangsrichtung jeweils zu seinen beiden Seiten jeweils einen Durchflusskanal für den Kunststoff, dessen Bodenseite durch ein Segment der Mantelfläche des zylindrischen oder konischen Körpers gebildet wird.

Jeweils zwei in Umfangsrichtung benachbarte, voneinander beabstandete längliche Wirkelemente können jeweils einen Durchflusskanal begrenzen, wobei die Bodenseite des Durchflusskanals durch das zwischen den beiden länglichen Wirkelementen angeordnete Segment der Mantelfläche des zylindrischen oder konischen Körpers des Zwischenab- schnitts des Grundkörpers gebildet wird.

Entlang des jeweiligen Durchflusskanals strömt der (plastifizierte/flüssige) Kunststoff während des Betriebs der Spritzgießmaschine in Richtung des Endbereichs des Grundkörpers der Rückstromsperre (bzw. der Plastifizierschnecke, dessen endständiger Bestandteil sie im Betrieb ist) in Richtung der Düse des Plastifizierungszylinders. Dies insbesondere während der Plastifizierungsphase und der Dosierphase.

Besonders bevorzugt ist durch entsprechende Abstimmung der relevanten Maße der radiale Abstand zwischen der Innenseite der Sperrhülse und der Mantelfläche des zylinderförmigen oder konischen Körpers des Zwischenabschnitts des Grundkörpers so gewählt, dass einerseits ein guter Durchfluss der Kunststoffmasse durch den sich entsprechend ergebenden Durchflusskanal zwischen Innenseite und Mantelfläche möglich ist und andererseits eine möglichst hohe Strömungsgeschwindigkeit erzielt wird.

Zu diesem Zweck weist der radiale Abstand zwischen der Innenseite der Sperrhülse und der Mantelfläche des zylinderförmigen oder konischen Körpers des Zwischenabschnitts des Grundkörpers vorzugsweise einen Wert auf, der in einem Intervall zwischen 1 mm und 6 mm liegt, besonders bevorzugt zwischen 2 mm und 5 mm.

Weiter ist es zweckmäßig, dass das oder jedes der Wirkelemente möglichst nah an der Innenseite der Sperrhülse endet. Bevorzugt ist entsprechend der radiale Abstand zwischen der Innenseite der Sperrhülse und dem jeweils gegenüber liegenden, länglichen Wirkelement, insbesondere einer der Innenseite der Sperrhülse zugewandten Außenseite oder Außenkante des länglichen Wirkelements, kleiner als 0,2 mm, vorzugweise kleiner als 0,1 mm.

Was die oben beschriebene zweite Variante der Erfindung betrifft, nämlich die Zuordnung eines oder mehrerer länglicher Wirkelemente zu einem oder mehreren Flügeln des Grundkörpers, so ist vorzugsweise vorgesehen, dass jeder Flügel des Grundkörpers jeweils ein solches längliches, insbesondere an dem jeweiligen Flügel (18) angeformtes oder an diesem befestigtes Wirkelement aufweist.

Dies derart, dass mit den länglichen Wirkelementen sich im Betrieb der Spritzgießmaschine ggf. im Bereich der endständigen Düse des Plastifizierzylinders ergebende Kunststoffablagerungen abgetragen bzw. abgefräst werden, wenn die Flügel in einer geeigneten Stellung in der Düse rotieren.

Das längliche Wirkelement jedes Flügels weist zu diesem Zweck eine freie, nach radial außen gewandte, insbesondere als Fräskante ausgebildete, bevorzugt linienförmige Längskante oder Außenkante auf oder ist durch eine solche gebildet.

Dabei laufen die nach radial außen gewandten freien (Außen-)Seiten oder freien (Außen-)Kanten der länglichen Wirkelemente der Flügel in Richtung eines freien Endes der Rückstromsperre bzw. des Grundkörpers konisch aufeinander zu.

Im Rahmen des Zusammenwirkens einer solchen Rückstromsperre, bei der ein oder mehrere Flügel mit ein oder mehreren länglichen Wirkelementen ausgerüstet sind, mit der Spritzgießmaschine im Übrigen, insbesondere mit deren Plastifizierzylinder, taucht der die Flügel aufweisende Endbereich des Grundkörpers der Rückstromsperre im Betrieb der Maschine in bekannter Weise in eine insbesondere einem Ende des Plastifizierzylinders zugeordnete Düse der Spritzgießmaschine, die mit einer mit Kunststoffmasse befüllbaren Kavität der Spritzgießmaschine fluidleitend verbunden ist. Bevorzugt ist der Grundkörper dabei mit den Flügeln und dem oder den länglichen Wirkelementen derart an die Kontur der insbesondere konisch zulaufenden Innenseite der Düse angepasst, dass die freie Außenseite oder die freie, insbesondere als Fräßkante ausgebildete, insbesondere längliche und linienförmige Außenkante des oder jedes der länglichen Wirkelemente, der Innenseite der Düse zugewandt ist und insbesondere zum Entfernen von störenden Kunststoffablagerungen in einer Eintauchendstellung parallel zu einem oder dem jeweils unmittelbar gegenüberliegenden Abschnitt dieser Innenseite verläuft.

Ein erfindungsgemäßes Verfahren zum Betreiben einer Spritzgießmaschine der vorgenannten Art zeichnet sich entsprechend dadurch aus, dass während des Einspritzvorgangs die die Rückstromsperre umfassende Plastifizierschnecke zum Entfernen von störenden, auf der Innenseite der Düse angeordneten Kunststoffablagerungen derart gesteuert wird, dass der Endbereich des Grundkörpers der Rückstromsperre zusammen mit den Flügeln in eine Eintauchendstellung bewegt wird, in der die freie, der Innenseite der Düse zugewandte Außenseite oder Außenkante des oder jedes der länglichen Wirkelemente parallel zu einem oder dem jeweils unmittelbar gegenüberliegenden Abschnitt dieser In- nenseite verläuft und in der der radiale Abstand der Außenseite oder Außenkante des oder jedes der länglichen Wirkelemente so gewählt ist, dass störende Kunststoffablage- rungen auf der Innenseite der Düse durch die Wirkelement entfernt werden oder entfernt werden können.

Vorzugsweise ist in dieser Eintauchendstellung der radiale Abstand der Außenseite oder Außenkante des länglichen Wirkelements von dem jeweils unmittelbar gegenüberliegendem Abschnitt der Innenseite der Düse kleiner als 1 mm, vorzugweise kleiner als 0,5 mm, sodass sich das oder jedes der Wirkelemente während einer Rotationsbewegung der Flügel möglichst nah an der Innenseite der Düse entlangbewegt und dabei im Rahmen eines Abfräsevorgangs auch dünne Ablagerungen erfassen/entfernen kann.

Was die Düse betrifft, so kann die Innenseite derselben vorzugsweise ohne Absätze oder Abrundungen durchgehend konisch verlaufen, insbesondere ausgehend von einer äußeren Öffnungsebene der Düse bis zu einem inneren Endabschnitt.

Weitere Merkmale der Erfindung ergeben sich aus den beigefügten Patentansprüchen, der nachfolgenden Beschreibung bevorzugter Ausführungsformen der Erfindung, die nur beispielhaft und nicht schutzeinschränkend zu verstehen sind, sowie aus der beigefügten Zeichnung. Darin zeigt:

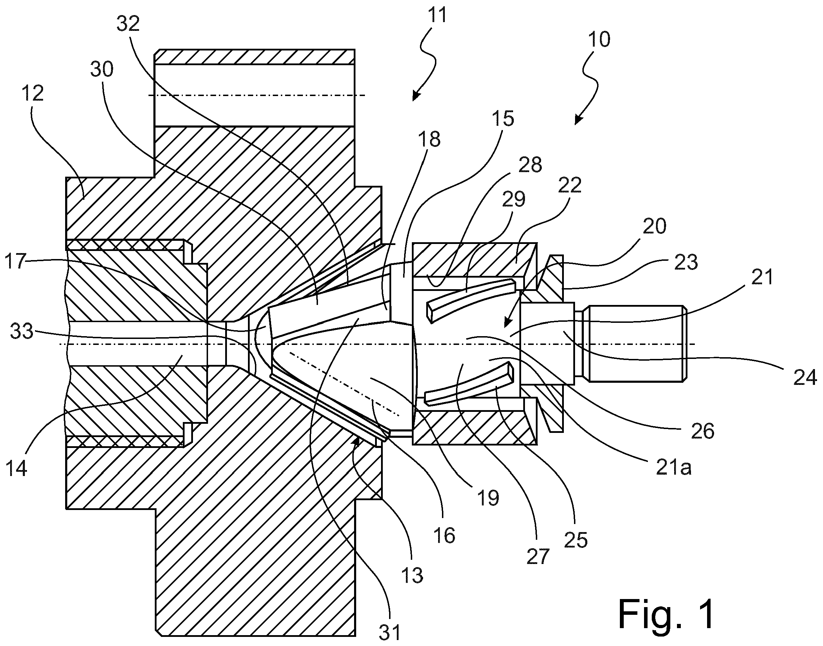

- Fig. 1: eine Schnittansicht einer erfindungsgemäßen Rückstromsperre zusammen mit einem eine Düse aufweisenden Flansch eines Plastifizierzylinders einer im Übrigen nicht dargestellten Spritzgießmaschine.

In der Fig. 1 ist schematisch eine Rückstromsperre 10 gezeigt, wie sie unter Bildung der 30 Schneckenspitze als ggf. lösbarer Bestandteil einer (ansonsten nicht gezeigten) Plastifizierschnecke in einem Plastifizierzylinder 11 einer Spritzgießmaschine verwendet werden kann. Die Rückstromsperre 10 ist dabei mit dem übrigen Teil der Plastifizierschnecke in der Regel drehfest, aber lösbar verbunden, beispielsweise verschraubt. Auch eine unlösbare Verbindung ist aber natürlich denkbar.

Von dem Plastifizierzylinder 11 ist in Fig. 1 nur ein endständiger Flansch 12 gezeigt, in dem eine Düse 13 des Plastifizierzylinders 11 angeordnet ist, die wiederum in bekannter Weise über einen Fluidkanal 14 mit der Kavität eines Spritzgusswerkzeugs der Spritzgieß- maschine fluidleitend verbunden ist.

Eine Spritzgießmaschine ist in ihrem grundsätzlichen Aufbau aus dem Stand der Technik gut bekannt, sodass weitere Bestandteile derselben aus Vereinfachungsgründen nicht gezeigt sind.

Die Rückstromsperre 10 weist einen (vorliegend massiven) Grundkörper 15 auf, in der Regel aus Stahl, der in einem Endbereich 16 über ein vorderes freies Ende 17 (endständige Spitze der Schnecke bzw. der Rückstromsperre 10) verfügt.

In dem Endbereich 16 des Grundkörpers 15, nämlich benachbart zu dem freien Ende 17, sind über den Umfang verteilt mehrere Flügel 18 angeordnet, zwischen denen jeweils in Umfangsrichtung Durchströmungskanäle 19 für die (nicht gezeigte) plastifizierte bzw. flüssige Kunststoffmasse gebildet sind.

Der Grundkörper 15 der Rückstromsperre 10 weist des Weiteren einen Zwischenabschnitt 20 auf mit einem zylindrischen Körper 21, der unmittelbar an die Flügel 18 angrenzt und mit diesen einstückig verbunden ist. Zumindest theoretisch ist auch denkbar, dass der Körper 21 leicht konisch verläuft.

Koaxial zu diesem Zwischenabschnitt 20 mit radialem Abstand zu dem zylindrischen Körper 21 ist ein Sperrring bzw. eine Sperrhülse 22 angeordnet.

In bekannter Weise ist die Sperrhülse 22 in Axialrichtung bewegbar. Bei einer axialen Bewegung der Sperrhülse 22 in Richtung des Endbereichs 16 des Grundkörpers 15 bzw. in Richtung der Flügel 18 schlägt die Sperrhülse 22 in bekannter Weise an dem Endbereich 16 an, vorliegend an Bodenseiten der Flügel 18. Bei einer entgegengesetzten axialen Bewegung schlägt sie an einem - ebenfalls an sich bekannten - Druckring 23 an, der drehfest mit dem Grundkörper 15 verbunden ist, nämlich vorliegend auf einem an den Zwischenabschnitt 20 angrenzenden, einstückig mit diesem verbundenen, zylindrischen Zapfen 24 sitzt.

In ebenfalls an sich bekannter Weise verschiebt die verflüssigte Kunststoffmasse während der Plastifizierungs- bzw. Dosierungsphase der Spritzgießmaschine die Sperrhülse 22 in Richtung des Endbereichs 16 bzw. des freien Endes 17 des Grundkörpers 15, wodurch sich zwischen Sperrhülse 22 und Druckring 23 ein Spalt ergibt, durch den der flüssige Kunststoff hindurchfließen kann. Während der späteren Einspritzphase drückt dann die im Schneckenvorraum des Plastifizierzylinders 11 befindliche Kunststoffschmelze die Sperr- hülse 22 wieder an den Druckring 23, wodurch dieser Spalt geschlossen wird.

Im Laufe des Betriebs der Spritzgießmaschine entstehen bei im Stand der Technik bekannten Rückstromsperren zwischen dem Zwischenabschnitt 20 des Grundkörpers 15 und der Sperrhülse 22 ungewollte, insbesondere ringförmige Kunststoffablagerungen, die sich negativ auf die Qualität der von der Spritzgießmaschine hergestellten Spritzgussteile auswirken können. Beispielsweise können sich diese Ablagerungen von Zeit zu Zeit lösen und ungewollt auf der Oberfläche des jeweiligen Spritzgussteils sichtbar werden.

Um dies zu verhindern, verfügt der Zwischenabschnitt 20 über einen zylindrischen Körper 21 mit entsprechend zylindrischer Mantelfläche 21a mit an diesem angeordneten, im vorliegenden Fall stegartigen, länglichen Wirkelementen 25. Die länglichen Wirkelemente 25 können dabei unmittelbar angeformt sein, also einstückig mit dem zylindrischen Körper 21 verbunden sein, aber natürlich auch an dem zylindrischen Körper 21 befestigt sein, beispielsweise mit diesem verschweißt sein.

Wie erkennbar ist, sind in Umfangsrichtung des zylindrischen Körpers 21 bzw. des Zwischenabschnitts 20 mehrere dieser länglichen Wirkelemente 25 jeweils mit Abstand zueinander (bezogen auf die Umfangsrichtung) vorhanden.

Zwischen zwei in Umfangsrichtung benachbarten länglichen Wirkelementen 25 ergeben sich entsprechend Durchflusskanäle oder Durchströmungskanäle 26 für den flüssigen Kunststoff, die jeweils bodenseitig durch ein zwischen den länglichen Wirkelementen 25 angeordnetes Segment 27 der Mantelfläche 21a begrenzt sind.

Die länglichen Wirkelemente 25 wirken dabei in Umfangsrichtung als Unterbrecher, die die Ausbildung eines geschlossenen Ablagerungsrings verhindern. Zweckmäßigerweise reichen sie hierfür möglichst nahe an die Innenseite 28 der Sperrhülse 22 heran. Im vorliegenden Beispiel ist der Abstand zwischen den der Innenseite 28 der Sperrhülse jeweils zugewandten Außenseiten 29 der jeweiligen länglichen Wirkelemente 25 kleiner als 0,2 mm.

Die länglichen Wirkelemente 25 verlaufen - wie jeweils gut zu erkennen ist - schräg bzw. winklig zur Axialen bzw. zur Längsachse der Rückstromsperre 10. Anders ausgedrückt verlaufen die länglichen Wirkelemente 25 - im vorliegenden Fall über deren gesamte Längserstreckung -, schräg bzw. winklig zu (den gedachten) Mantellinien der Mantelfläche 21a.

Der Verlauf der länglichen Wirkelemente 25 bzw. die jeweilige Schrägstellung derselben ist dabei derart gewählt, dass das jeweilige längliche Wirkelement 25 als Förderorgan wirkt, mit dem im Betrieb der Spritzgießmaschine während der Plastifizierungs- und Dosierungsphase, in der die Plastifizierschnecke mitsamt dem Grundkörper 15 der Rückstromsperre um die Längsachse rotiert wird, Kunststoffmasse durch die mitrotierenden länglichen Wirkelemente 25 in Richtung des freien Endes 17 der Rückstromsperre 10 weitergefördert wird. Hierdurch wird die Durchflussgeschwindigkeit der flüssigen Kunststoffmasse im Bereich des Zwischenabschnitts 20 gegenüber Rückstromsperren ohne solche länglichen Wirkelemente 25 erhöht.

Durch entsprechende Abstimmung der relevanten Maße ist der radiale Abstand zwischen der Innenseite 28 der Sperrhülse 22 und der Mantelfläche 21a des zylinderförmigen Körpers 21 des Zwischenabschnitts 20 des Grundkörpers 15 so gewählt, dass einerseits ein guter Durchfluss der flüssigen Kunststoffmasse durch den jeweiligen Durchströmungskanal 26 zwischen Innenseite 28 und Mantelfläche 21a möglich ist und andererseits eine möglichst hohe Strömungsgeschwindigkeit erzielt wird.

Zu diesem Zweck weist der radiale Abstand zwischen der Innenseite 28 der Sperrhülse 22 und der Mantelfläche 21a des zylinderförmigen Körpers 21 des Zwischenabschnitts 20 des Grundkörpers 15 im vorliegenden Fall einen Wert auf, der in einem Intervall zwischen 2 mm und 4 mm liegt.

Auch an der im vorliegenden Fall konisch zulaufenden Innenseite 33 der Düse 13 können sich Kunststoffablagerungen bilden. Um diese im Betrieb der Schnecke bzw. bei rotierendem Grundkörper 15 der Rückstromsperre 10 entfernen zu können, sind (auch) die Flügel 18 mit länglichen Wirkelementen 30 ausgerüstet. Im vorliegenden Fall ist dabei an jedem Flügel 18 jeweils ein Wirkelement 30 angeordnet, nämlich jeweils an einer der Innenseite 33 der Düse 13 zugewandten Außenfläche 31 jedes Flügels 18 (entweder dort angeformt oder dort befestigt).

Jedes längliche Wirkelement 30 weist im folgenden Fall eine längliche Außenkante 32 auf, die als Fräskante dient. In der in Fig. 1 gezeigten Eintauchendstellung des Grundkörpers 15 verlaufen diese länglichen Außenkanten 32 jeweils parallel mit geringem Abstand zu einem unmittelbar gegenüberliegenden Abschnitt der Innenseite 33. Diese Parallelstellung der Außenkanten 32 zur Innenseite 33 wird während der gesamten Rotation in der gezeigten Eintauchendstellung beibehalten, sodass die Außenkanten mit möglichst geringem, gleich bleibendem Abstand zur Innenseite 33 rotieren. Auf diese Weise werden die länglichen Wirkelemente 30 während der Rotationsbewegung der Flügel 18 möglichst nah an der Innenseite 33 der Düse 13 entlangbewegt und können dann im Rahmen eines Abfräsvorgangs auch dünne Ablagerungen erfassen und entfernen.

Im vorliegenden Ausführungsbeispiel ist in dieser Eintauchendstellung der radiale Abstand der Außenkanten 32 zu dem jeweils unmittelbar gegenüberliegendem Abschnitt der Innenseite 33 der Düse 13 kleiner als 1 mm.

### Bezugszeichenliste

- 10: Rückstromsperre
- 11: Plastifizierzylinder
- 12: Flansch
- 13: Düse
- 14: Fluidkanal
- 15: Grundkörper
- 16: Endbereich
- 17: freies Ende
- 18: Flügel
- 19: Durchströmungskanäle Flügel
- 20: Zwischenabschnitt
- 21: zylindrischer Körper
- 21a: Mantelfläche
- 22: Sperrhülse
- 23: Druckring
- 24: Zapfen
- 25: Wirkelemente Zwischenabschnitt
- 26: Durchströmungskanäle Zwischenabschnitt
- 27: Segment
- 28: Innenseite Sperrhülse
- 29: Außenseiten Wirkelemente
- 30: Wirkelemente Flügel
- 31: Außenfläche Flügel
- 32: Außenkante
- 33: Innenseite Düse

## Patentansprüche

1. Rückstromsperre für eine Plastifizierschnecke einer Spritzgießmaschine, mit einem Grundkörper (15) mit in einem Endbereich (16) angeordneten Flügeln (18), einem mit dem Grundkörper (15) verbundenen Druckring (23) und einer axial relativ zu dem Grundkörper (15) verschiebbaren, vorzugsweise eine zylindrische Innenseite aufweisenden Sperrhülse (22), die einen zwischen den Flügeln (18) und dem Druckring (23) angeordneten Zwischenabschnitt (20) des Grundkörpers (15) mit radialem Abstand umschließt, wobei der Zwischenabschnitt (20) des Grundkörpers (15) und/oder die Flügel (18) des Grundkörpers (15) längliche Wirkelemente (25, 30) aufweisen, wobei die Wirkelemente (30) der Flügel (18) im Betrieb der Spritzgießmaschine dem Entstehen von störenden Kunststoffablagerungen entgegenwirken können, und wobei der Zwischenabschnitt (20) des Grundkörpers (15) ein zylinderförmiger oder konusförmiger Körper mit entsprechend zylindrischer oder konischer Mantelfläche ist, an dem drei längliche Wirkelemente (25) angeordnet sind, wobei die länglichen Wirkelemente (25) in Umfangsrichtung des Zwischenabschnitts (20) voneinander beabstandet sind, **dadurch gekennzeichnet, dass** jedes der länglichen Wirkelemente (25) des Zwischenabschnitts (20) des Grundkörpers (15) in Umfangsrichtung jeweils zu seinen beiden Seiten jeweils einen Durchflusskanal für den Kunststoff begrenzt, dessen Bodenseite durch ein Segment der Mantelfläche des Körpers des Zwischenabschnitts (20) gebildet wird, und eine Erhebung der Außenseite des Zwischenabschnitts (20) bildet derart, dass das Entstehen von ringförmig geschlossenen, umlaufenden Ablagerungen von Kunststoff zwischen dem Zwischenabschnitt (20) und der Sperrhülse (22) verhindert wird, wobei jedes der länglichen Wirkelemente (25) des Zwischenabschnitts (20) mindestens abschnittsweise schräg zu gedachten Mantellinien der Mantelfläche des zylinderförmigen oder konusförmigen Körpers des Zwischenabschnitts (20) verläuft, wobei jedes der länglichen Wirkelemente (25) des Zwischenabschnitts (20) nicht umlaufend in Umfangsrichtung auf der Mantelfläche des Zwischenabschnitts (20) angeordnet sind, und/oder dass jeder Flügel (18) des Grundkörpers (15) jeweils ein längliches Wirkelement (30) aufweist, das eine freie, nach radial außen gewandte, längliche Außenkante aufweist oder durch eine solche gebildet ist, wobei diese Außenkanten der Flügel (18) in Richtung eines freien Endes des Grundkörpers (15) konisch aufeinander zulaufen.

2. Rückstromsperre gemäß Anspruch 1, **dadurch gekennzeichnet, dass** jedes der länglichen Wirkelemente (25) des Zwischenabschnitts (20) an dem Körper des Zwischenabschnitts (20) befestigt oder angeformt ist.

3. Rückstromsperre gemäß einem oder mehreren der vorhergehenden Ansprüche, **dadurch gekennzeichnet, dass** jedes der länglichen Wirkelemente (25) des Zwischenabschnitts (20) über die gesamte Länge desselben schräg zu den gedachten Mantellinien der Mantelfläche des zylinderförmigen oder konusförmigen Körpers des Zwischenabschnitts (20) verläuft.

4. Rückstromsperre gemäß einem oder mehreren der vorhergehenden Ansprüche, **dadurch gekennzeichnet, dass** der radiale Abstand zwischen der Innenseite der Sperrhülse (22) und dem jeweils gegenüber liegenden, länglichen Wirkelement (25), insbesondere einer der Innenseite der Sperrhülse (22) zugewandten Außenseite oder Außenkante des länglichen Wirkelements (25), kleiner ist als 2 mm, vorzugweise kleiner als 1 mm.

5. Rückstromsperre gemäß einem oder mehreren der vorhergehenden Ansprüche, **dadurch gekennzeichnet, dass** der radiale Abstand zwischen der Innenseite der Sperrhülse (22) und der Mantelfläche des zylinderförmigen oder konischen Körpers des Zwischenabschnitts (20) des Grundkörpers (15) einen Wert aufweist, der in einem Intervall zwischen 1 mm und 6 mm liegt, besonders bevorzugt zwischen 2 mm und 5 mm.

6. Rückstromsperre gemäß einem oder mehreren der vorhergehenden Ansprüche, **dadurch gekennzeichnet, dass** ein oder mehrere oder jeder Flügel (18) des Grundkörpers (15) (ggf. jeweils) ein längliches, insbesondere an dem jeweiligen Flügel (18) angeformtes oder an diesem befestigtes Wirkelement (30) aufweist.

7. Spritzgießmaschine mit einer Rückstromsperre gemäß einem oder mehreren der vorhergehenden Ansprüche 1-6.

8. Spritzgießmaschine gemäß Anspruch 7, **dadurch gekennzeichnet, dass** die Spritzgießmaschine eine insbesondere in einem Flansch (12) angeordnete, mit einer mit Kunststoffmasse befüllbaren Kavität der Spritzgießmaschine fluidleitend verbundene Düse (13) aufweist, in die während des Einspritzvorgangs der Endbereich (16) des Grundkörpers (15) der Rückstromsperre zusammen mit den Flügeln (18) eintaucht, wobei der Grundkörper (15) mit den Flügeln (18) und dem oder den länglichen Wirkelementen (30) derart an die Kontur der insbesondere konisch zulaufenden Innenseite der Düse (13) angepasst ist, dass die freie Außenseite oder die freie, insbesondere als Fräßkante ausgebildete, insbesondere längliche und linienförmige Außenkante des oder jedes der länglichen Wirkelemente (30), der Innenseite der Düse (13) zugewandt ist und insbesondere zum Entfernen von störenden Kunststoffablagerungen in einer Eintauchendstellung parallel zu einem oder dem jeweils unmittelbar gegenüberliegenden Abschnitt dieser Innenseite verläuft.

9. Spritzgießmaschine gemäß Anspruch 8, **dadurch gekennzeichnet, dass** in dieser Eintauchendstellung der radiale Abstand der Außenseite oder Außenkante des oder jedes der länglichen Wirkelemente (30) von dem jeweils unmittelbar gegenüberliegendem Abschnitt der Innenseite der Düse (13) kleiner ist als 0,2 mm, vorzugweise kleiner als 0, 1 mm.

10. Spritzgießmaschine gemäß Anspruch 8 oder 9, **dadurch gekennzeichnet, dass** die Innenseite der Düse (13) ohne Absätze oder Abrundungen durchgehend konisch verläuft, insbesondere ausgehend von einer äußeren Öffnungsebene der Düse (13) bis zu einem inneren Endabschnitt.

11. Verfahren zum Betreiben einer Spritzgießmaschine der Ansprüche 7 bis 10, wobei während des Einspritzvorgangs die die Rückstromsperre umfassende Plastifizierschnecke zum Entfernen von störenden, auf der Innenseite der Düse (13) angeordneten Kunststoffablagerungen derart gesteuert wird, dass der Endbereich (16) des Grundkörpers (15) der Rückstromsperre zusammen mit den Flügeln (18) in eine Eintauchendstellung bewegt wird, in der die freie, der Innenseite der Düse (13) zugewandte Außenseite oder Außenkante des oder jedes der länglichen Wirkelemente (30) parallel zu einem oder dem jeweils unmittelbar gegenüberliegenden Abschnitt dieser Innenseite verläuft und in der der radiale Abstand der Außenseite oder Außenkante des oder jedes der länglichen Wirkelemente (30) so gewählt ist, dass störende Kunststoffablagerungen auf der Innenseite der Düse (13) durch die Wirkelement (30) entfernt werden oder entfernt werden können, insbesondere derart gewählt, dass der Abstand von dem jeweils unmittelbar gegenüberliegendem Abschnitt der Innenseite der Düse (13) kleiner ist als 0,2 mm, vorzugweise kleiner als 0, 1 mm.

## Claims

1. Non-return valve for a preplastifying spindle of an injection molding machine, comprising a base body (15) with wings (18) arranged in an end section (16), a pressure ring (23) connected to the base body (15) and a locking sleeve (22) that can be moved axially relative to the base body (15), having preferably a cylindrical inner surface, which surrounds an intermediate section (20) of the base body (15) arranged between the wings (18) and the pressure ring (23) at a radial distance, wherein the intermediate section (20) of the base body (15) and/or the wings (18) of the base body (15) have elongated working elements (25, 30), wherein the working elements (30) of the wings (18) can counteract the formation of disruptive plastic deposits during operation of the injection molding machine, and wherein the intermediate section (20) of the base body (15) is a cylindrical or conical body with a correspondingly cylindrical or conical outer surface, on which three elongated working elements (25) are arranged, wherein the elongated working elements (25) are spaced apart from one another in the circumferential direction of the intermediate section (20), **characterized in that** each of the elongated working elements (25) of the intermediate section (20) of the base body (15) delimits a flow channel for the plastic in the circumferential direction on each of its two sides, the bottom side of which is formed by a segment of the lateral area of the body of the intermediate section (20), and forms a raised portion on the outer side of the intermediate section (20) in such a way that the formation of annular closed, circumferential deposits of plastic between the intermediate section (20) and the locking sleeve (22) is prevented, wherein each of the elongated working elements (25) of the intermediate section (20) runs at least in sections obliquely to imaginary generatrices of the lateral surface of the cylindrical or conical body of the intermediate section (20), wherein each of the elongated working elements (25) of the intermediate section (20) is not arranged circumferentially on the lateral surface of the intermediate section (20), and/or each wing (18) of the base body (15) has an elongated working element (30) which has a free, radially outwardly facing elongated outer edge or is formed by such an edge, wherein these outer edges of the wings (18) conically taper towards each other in the direction of a free end of the base body (15).

2. Non-return valve according to claim 1, **characterized in that** each of the elongated working elements (25) of the intermediate section (20) is attached to or formed on the body of the intermediate section (20).

3. Non-return valve according to one or more of the preceding claims, **characterized in that** each of the elongated working elements (25) of the intermediate section (20) runs obliquely to the imaginary generatrices of the lateral surface of the cylindrical or conical body of the intermediate section (20) over the entire length thereof.

4. Non-return valve according to one or more of the preceding claims, **characterized in that** the radial distance between the inner side of the locking sleeve (22) and the respective opposite elongated working element (25), in particular an outer side or outer edge of the elongated working element (25) facing the inner side of the locking sleeve (22), is less than 2 mm, preferably less than 1 mm.

5. Non-return valve according to one or more of the preceding claims, **characterized in that** the radial distance between the inner side of the locking sleeve (22) and the outer surface of the cylindrical or conical body of the intermediate section (20) of the base body (15) has a value that lies within an interval between 1 mm and 6 mm, particularly preferably between 2 mm and 5 mm.

6. Non-return valve according to one or more of the preceding claims, **characterized in that** one or more or each wing (18) of the base body (15) has (if applicable, each) an elongated working element (30), the working element (30) being especially formed on or attached to the respective wing (18).

7. Injection molding machine with a non-return valve according to one or more of the preceding claims 1-6.

8. Injection molding machine according to claim 7, **characterized in that** the injection molding machine has a nozzle (13) arranged in particular in a flange (13) and connected in a fluid-conducting manner to a cavity of the injection molding machine that can be filled with plastic material, into which, during the injection process, the end section (16) of the base body (15) of the non-return valve immerses together with the wings (18), wherein the base body (15) with the wings (18) and the elongated working element(s) (30) is adapted to the contour of the particularly conically tapering inner side of the nozzle (13) in such a way that the free outer side or the free, in particular elongated and linear outer edge of the or each of the elongated working elements (30), in particular designed as a milled edge, faces the inner side of the nozzle (13) and, in particular for removing disruptive plastic deposits, runs parallel to one or the respective directly opposite section of this inner side in an immersed position.

9. Injection molding machine according to claim 8, **characterized in that**, in this immersion position, the radial distance between the outer side or outer edge of the or each of the elongated working elements (30) and the respective directly opposite section of the inner side of the nozzle (13) is less than 0.2 mm, preferably less than 0.1 mm.

10. Injection molding machine according to claim 8 or 9, **characterized in that** the inner side of the nozzle (13) is continuously conical without any steps or roundings, in particular from an outer opening plane of the nozzle (13) to an inner end section.

11. Method for operating an injection molding machine according to claims 7 to 10, wherein during the injection process, the preplastifying spindle comprising the non-return valve is controlled to remove disruptive plastic deposits located on the inner side of the nozzle (13) in such a way that the end section (16) of the base body (15) of the non-return valve is moved together with the wings (18) into an immersion position in which the free outer side or outer edge of the or each of the elongated working elements (30) facing the inner side of the nozzle (13), runs parallel to one or the respective directly opposite section of this inner side, and in which the radial distance of the outer side or outer edge of the or each of the elongated working elements (30) is selected such that disruptive plastic deposits on the inner side of the nozzle (13) are or can be removed by the working element (30), in particular selected such that the distance from the respective directly opposite section of the inner side of the nozzle (13) is less than 0.2 mm, preferably less than 0.1 mm.

## Revendications

1. Clapet anti-retour pour une vis de plastification d'une machine de moulage par injection, comprenant un corps de base (15) avec des ailettes (18) disposées dans une zone d'extrémité (16), une bague de pression (23) reliée au corps de base (15) et un manchon de blocage (22) déplaçable axialement par rapport au corps de base (15), présentant de préférence une face intérieure cylindrique, qui entoure avec un écart radial une partie intermédiaire (20) du corps de base (15) disposée entre les ailettes (18) et la bague de pression (23), la partie intermédiaire (20) du corps de base (15) et/ou les ailettes (18) du corps de base (15) comportant des éléments actifs allongés (25, 30), les éléments actifs (30) des ailettes (18) pouvant, pendant le fonctionnement de la machine de moulage par injection, empêcher la formation de dépôts de matière plastique gênants, et la partie intermédiaire (20) du corps de base (15) étant un corps cylindrique ou conique avec une surface d'enveloppe cylindrique ou conique correspondante, sur laquelle sont disposés trois éléments actifs allongés (25), les éléments actifs allongés (25) étant espacés les uns des autres dans la direction circonférentielle de la partie intermédiaire (20), **caractérisé en ce que** chacun des éléments actifs allongés (25) de la partie intermédiaire (20) du corps de base (15) délimite, dans la direction circonférentielle, de chaque côté, un canal d'écoulement pour la matière plastique, dont le fond est formé par un segment de la surface d'enveloppe du corps de la partie intermédiaire (20), et forme une élévation de la face extérieure de la partie intermédiaire (20) de telle sorte que la formation de dépôts de matière plastique fermés de manière annulaire et circulaires entre la partie intermédiaire (20) et le manchon de blocage (22) est empêchée, chacun des éléments actifs allongés (25) de la partie intermédiaire (20) s'étendant au moins par sections de manière oblique par rapport aux génératrices imaginaires de la surface d'enveloppe du corps cylindrique ou conique de la section intermédiaire (20), chacun des éléments actifs allongés (25) de la partie intermédiaire (20) n'étant pas disposé de manière circonférentielle sur la surface d'enveloppe de la partie intermédiaire (20), et/ou **en ce que** chaque ailette (18) du corps de base (15) comporte respectivement un élément actif allongé (30) qui présente un bord extérieur allongé libre, tourné vers l'extérieur dans le sens radial, ou qui est formé par un tel bord, ces bords extérieurs des ailettes (18) convergeant de manière conique l'un vers l'autre en direction d'une extrémité libre du corps de base (15).

2. Clapet anti-retour selon la revendication 1, **caractérisé en ce que** chacun des éléments actifs allongés (25) de la partie intermédiaire (20) est fixé ou moulé sur le corps de la partie intermédiaire (20).

3. Clapet anti-retour selon une ou plusieurs des revendications précédentes, **caractérisé en ce que** chacun des éléments actifs allongés (25) de la partie intermédiaire (20) s'étend sur toute la longueur de celle-ci de manière oblique par rapport aux génératrices imaginaires de la surface d'enveloppe du corps cylindrique ou conique de la partie intermédiaire (20).

4. Clapet anti-retour selon une ou plusieurs des revendications précédentes, **caractérisé en ce que** la distance radiale entre la face intérieure du manchon de blocage (22) et l'élément actif allongé (25) opposé, en particulier une face extérieure ou un bord extérieur de l'élément actif allongé (25) tourné vers la face intérieure du manchon de blocage (22), est inférieure à 2 mm, de préférence inférieure à 1 mm.

5. Clapet anti-retour selon une ou plusieurs des revendications précédentes, **caractérisé en ce que** la distance radiale entre la face intérieure du manchon de blocage (22) et la surface d'enveloppe du corps cylindrique ou conique de la partie intermédiaire (20) du corps de base (15) présente une valeur comprise dans un intervalle entre 1 mm et 6 mm, de préférence entre 2 mm et 5 mm.

6. Clapet anti-retour selon une ou plusieurs des revendications précédentes, **caractérisé en ce qu'**une ou plusieurs ou chacune des ailettes (18) du corps de base (15) comporte (le cas échéant) un élément actif (30) allongé, en particulier moulé sur l'ailette respective (18) ou fixé à celle-ci.

7. Machine de moulage par injection avec un clapet anti-retour selon une ou plusieurs des revendications 1 à 6 précédentes.

8. Machine de moulage par injection selon la revendication 7, **caractérisée en ce que** la machine de moulage par injection comporte une buse (13) disposée en particulier dans une bride (12) et reliée de manière fluide à une cavité de la machine de moulage par injection pouvant être remplie de matière plastique, dans laquelle, pendant le processus d'injection, la zone d'extrémité (16) du corps de base (15) du clapet anti-retour plonge avec les ailettes (18), le corps de base (15) avec les ailettes (18) et le ou les éléments actifs allongés (30) étant adapté au contour de la face intérieure notamment conique de la buse (13) de telle sorte que la face extérieure libre ou la face libre, en particulier sous forme de bord fraisé, en particulier allongé et linéaire, de l'un ou de chacun des éléments actifs allongés (30) est tourné vers la face intérieure de la buse (13) et s'étend en particulier, pour éliminer les dépôts de matière plastique gênants, dans une position d'immersion parallèle à une section ou à la section immédiatement opposée de cette face intérieure.

9. Machine de moulage par injection selon la revendication 8, **caractérisée en ce que**, dans cette position immergée, la distance radiale entre la face extérieure ou le bord extérieur de l'un ou de chacun des éléments actifs allongés (30) et la partie directement opposée de la face intérieure de la buse (13) est inférieure à 0,2 mm, de préférence inférieure à 0,1 mm.

10. Machine de moulage par injection selon la revendication 8 ou 9, **caractérisée en ce que** la face intérieure de la buse (13) s'étend de manière conique sans décrochements ni arrondis, en particulier à partir d'un plan d'ouverture extérieur de la buse (13) jusqu'à une partie d'extrémité intérieure.

11. Procédé pour faire fonctionner une machine de moulage par injection selon les revendications 7 à 10, dans lequel, pendant le processus d'injection, la vis de plastification comprenant le clapet anti-retour est commandée de manière à éliminer les dépôts de matière plastique gênants disposés sur la face intérieure de la buse (13) de manière à ce que la zone d'extrémité (16) du corps de base (15) du clapet anti-retour soit déplacée avec les ailettes (18) dans une position d'immersion dans laquelle la face extérieure ou le bord extérieur libre, tourné vers la face intérieure de la buse (13), du ou de chacun des éléments actifs allongés (30) s'étend parallèlement à une partie ou à la partie immédiatement opposée de cette face intérieure et dans laquelle la distance radiale entre la face extérieure ou le bord extérieur du ou de chacun des éléments actifs allongés (30) est choisie de telle sorte que les dépôts de matière plastique gênants sur la face intérieure de la buse (13) soient ou puissent être éliminés par les éléments actifs (30), en particulier de telle sorte que la distance par rapport à la partie directement opposée de la face intérieure de la buse (13) soit inférieure à 0,2 mm, de préférence inférieure à 0,1 mm.
